# FASCICULE DE BREVET EUROPEEN

(11) **EP 3 645 328 B1**
(45) Date de publication et mention de la délivrance du brevet: **19.05.2021**
(21) Numéro de dépôt: 18755507.3
(22) Date de dépôt: 28.06.2018
(51) Int. Cl.: B60C 23/00, B60K 7/00, B60K 17/34, F04B 1/047

(54) **PIVOT DE DIRECTION AMÉLIORÉ FORMANT UN CONDUIT PNEUMATIQUE INTERNE**
VERBESSERTER LENKUNGSDREHZAPFEN, DER EINEN INTERNEN PNEUMATISCHEN DURCHGANG BILDET
IMPROVED STEERING PIVOT PIN FORMING AN INTERNAL PNEUMATIC PASSAGE

(30) Priorité: 30.06.2017 FR 1756152
(43) Date de publication de la demande: 06.05.2020
(73) Titulaire: Poclain Hydraulics Industrie, 60410 Verberie (FR)
(72) Inventeur: FREY, Adam, Racine Wisconsin 53402 (US); HAWK, Homer, Franklin Wisconsin 53132 (US); MICHON, Sylvain, Oak Creek Wisconsin 53154 (US)
(74) Mandataire: Cabinet Beau de Loménie
(86) Numéro de dépôt international: PCT/FR2018/051588
(87) Numéro de publication internationale: WO 2019/002774

(56) Documents cités:
- FR-A- 338 562
- FR-A1- 2 465 602
- FR-A1- 3 037 533
- GB-A- 2 477 816

## Description

### DOMAINE DE L'INVENTION

Le présent exposé concerne les machines hydrauliques, et plus précisément l'association d'un système d'alimentation pneumatique sur une roue de véhicule entraînée par un appareil hydraulique.

### ETAT DE LA TECHNIQUE ANTERIEURE

Il est connu de proposer un système d'alimentation pneumatique sur une roue de véhicule afin de contrôler l'état de gonflage et de permettre le gonflage/dégonflage des pneumatiques, et ainsi de par exemple de faire varier la surface de contact avec le sol, ce qui s'avère particulièrement intéressant pour certaines applications.

Dans le cadre de roues directrices du véhicule, une problématique récurrente est la réalisation de l'alimentation pneumatique entre l'essieu fixe et la roue mobile. Les systèmes d'alimentation employant des conduites flexibles s'avèrent en effet problématiques dans certaines applications et peuvent amener des risques de rupture. De manière générale l'air doit être acheminé d'un compresseur fixe par rapport au châssis / essieu à une roue directrice. La roue directrice ayant un mouvement pivotant par rapport au châssis, un flexible liant directement le compresseur à la roue subit des déplacements répétés et le risque d'usure et d'arrachement est important. Les documents FR 2465602 A1, 3037533 A1, GB 2477816 A et FR 338562 A présentent différentes structures d'essieux connues.

Le présent exposé vise ainsi à répondre au moins partiellement à cette problématique.

### PRESENTATION DE L'INVENTION

A cet effet, le présent exposé propose un ensemble comprenant un appareil hydraulique comprenant un rotor et un stator, le rotor étant monté tournant par rapport au stator selon un second axe de rotation, et étant solidaire de moyens adaptés pour le montage d'une roue de véhicule, un élément de pivot destiné à être monté sur un essieu, et mobile en rotation par rapport à l'appareil hydraulique selon un premier axe de rotation, le stator étant monté tournant par rapport à l'essieu selon le premier axe de rotation,
caractérisé en ce qu'une chambre à air est formée entre l'élément de pivot et l'appareil hydraulique, ladite chambre à air étant reliée à un conduit de distribution aménagé dans l'appareil hydraulique, et à un conduit d'essieu aménagé dans l'élément de pivot, de manière à former un conduit pneumatique entre l'élément de pivot et l'appareil hydraulique, afin de permettre d'acheminer de l'air pour le gonflage/dégonflage d'un pneumatique.

Ledit ensemble comprend typiquement au moins un patin de frottement positionné au contact de l'appareil hydraulique et de l'élément de pivot, configuré de manière à permettre un mouvement en rotation autour du premier axe de rotation entre l'élément de pivot et l'appareil hydraulique.

Ledit au moins un patin de frottement est alors typiquement positionné dans une chambre à graisse isolée de la chambre à air au moyen d'un joint à graisse, ladite chambre à graisse étant reliée à un conduit graisseur aménagé dans l'élément de pivot ou dans l'appareil hydraulique.

La chambre à graisse est ainsi typiquement séparée de la chambre à air par au moins un élément d'étanchéité.

La chambre à graisse est alors typiquement séparée de la chambre à air par deux éléments d'étanchéité montés successivement, définissant entre eux une chambre intermédiaire, relié au milieu ambiant par un conduit comprenant un clapet anti retour taré

Le clapet anti-retour taré est alors typiquement configuré pour s'ouvrir pour une différence de pression inférieur à 1 bar, de préférence inférieur 0,5 bar.

Selon un exemple, ledit ensemble comprend en outre une pièce intermédiaire de rotation positionné dans un logement formé entre l'appareil hydraulique et l'élément de pivot.

Selon un mode de réalisation particulier d'un tel exemple, une première chambre à air est formée entre l'élément de pivot et la pièce intermédiaire de rotation, une seconde chambre à air est formée entre la pièce intermédiaire de rotation et l'appareil hydraulique, la première chambre à air est reliée au conduit d'essieu, la seconde chambre à air est reliée au conduit de distribution, et la première chambre à air est reliée à la seconde chambre à air via un conduit intermédiaire formé dans la pièce intermédiaire de rotation.

Selon un exemple, chaque chambre à air est délimitée par des éléments d'étanchéité.

Selon un exemple, l'élément de pivot et/ou l'appareil hydraulique comprennent au moins un conduit reliant des volumes adjacent aux chambres à air au milieu ambiant, chacun desdits au moins un conduit étant muni d'un clapet anti retour taré, configuré de manière à permettre un échappement de fluide vers le milieu ambiant lorsque la pression au sein desdits volumes adjacent aux chambres à air dépasse une valeur seuil.

Le présent exposé concerne également un véhicule muni d'un tel système.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- la figure 1 représente un système selon un aspect de l'invention.
- la figure 2 est une vue détaillée d'une zone de la figure 2,
- la figure 3 est une vue détaillée similaire à la figure 2 présentant une variante, et
- la figure 4 est une vue détaillée similaire à la figure 2 présentant une autre variante.

Sur l'ensemble des figures, les éléments en commun sont repérés par des références numériques identiques.

### DESCRIPTION DETAILLEE D'EXEMPLES DE REALISATION

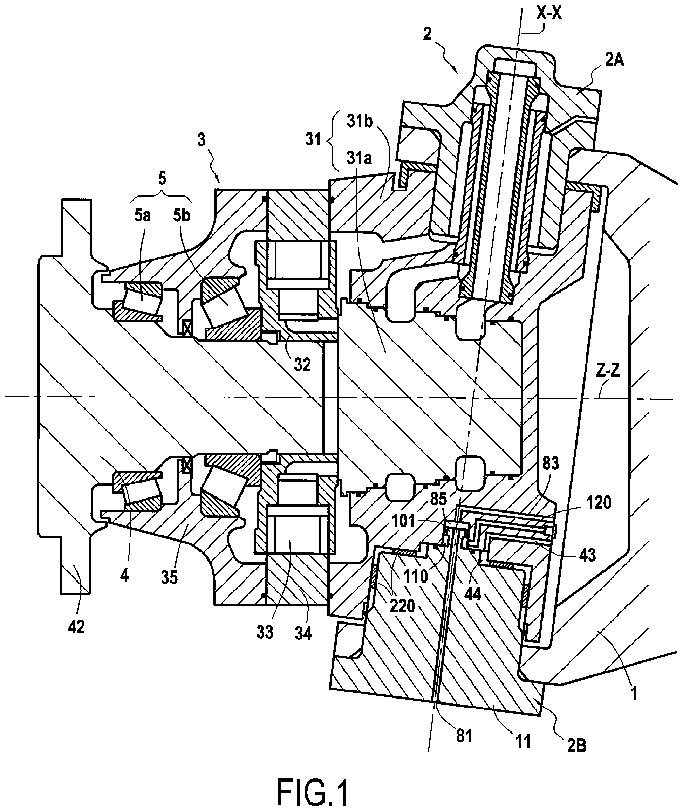

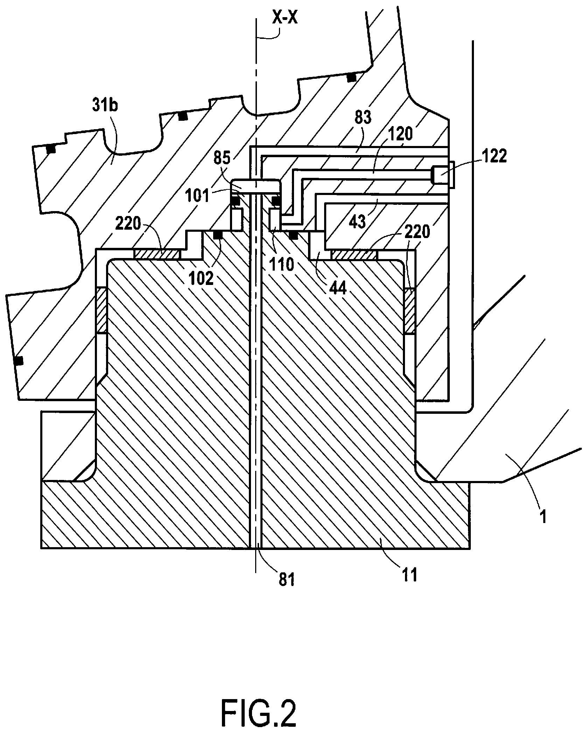

On décrit ci-après un premier mode de réalisation de l'invention en référence aux figures 1 et 2.

On représente sur ces figures un système comprenant un appareil hydraulique 3 couplé à un essieu 1 par l'intermédiaire d'un pivot 2. L'appareil hydraulique 3 est monté mobile par rapport à l'essieu 1 selon un premier axe de rotation X-X par l'intermédiaire du pivot 2.

L'appareil hydraulique 3 est par exemple un appareil hydraulique à pistons radiaux et came multilobes. A titre de variante, l'appareil hydraulique peut être un appareil à pistons axiaux, un appareil à palettes, un appareil à engrenages intérieurs ou extérieurs.

Il comprend ainsi un distributeur 31 formé d'un noyau 31a entouré d'un carter de distribution 31b, un bloc cylindres 32 comprenant une pluralité de cylindres s'étendant radialement par rapport à un second axe de rotation Z-Z et dans lesquels coulissent des pistons 33, et une came 34 multilobes disposée en regard des pistons 33. L'appareil hydraulique 3 comprend également un arbre 4 et un carter 35, dont des sections peuvent être formées notamment par la came 34 et par le carter de distribution 31b.

On définit pour l'appareil hydraulique 3 un ensemble d'éléments fixes ou stator, et un ensemble d'éléments tournants ou rotor. Dans l'exemple illustré, le rotor comprend l'arbre 4 et le bloc cylindres 32, tandis que le stator comprend la came 34, le carter 35 et le distributeur 31. On comprend cependant que le rotor et le stator sont définis en fonction de l'application souhaitée, mais qu'un appareil hydraulique 3 peut ainsi par exemple être employé dans un montage à carter tournant et arbre fixe, ou dans un montage à carter fixe et arbre tournant, ce qui correspond à l'application représentée sur la figure 1. La liaison entre le rotor et le stator est réalisée via un palier 5 comprenant ici deux éléments de roulement 5A et 5B, typiquement des roulements coniques, ici disposés selon un montage en O. Par exemple le roulement 5A est un roulement lubrifié à la graisse et le roulement 5B est un roulement lubrifié à l'huile, notamment l'huile de l'appareil hydraulique. Un joint est disposé entre les deux roulement pour éviter la contamination de la graisse par l'huile. A titre d'alternative, les deux éléments de roulements 5A et 5B sont disposés selon un montage en X.

L'appareil hydraulique 3 comprend typiquement des moyens configurés pour permettre de porter une jante et un pneumatique de roue de véhicule. Dans l'exemple représenté, l'arbre de l'appareil hydraulique 3 forme une fusée de roue, présentant une extrémité libre munie d'une portion s'étendant radialement et formant une zone de support pour la fixation d'une jante (non représentée). Dans l'exemple illustré, l'arbre 4 forme ainsi une fusée de roue comprenant un moyeu 42 à une extrémité libre pour la fixation d'une jante.

Dans l'exemple représenté, le pivot 2 relie le carter de distribution 31b (également appelée carter de distribution) à l'essieu 1 via deux liaisons pivot 2A et 2B alignées selon l'axe X-X de part et d'autre de l'appareil hydraulique 3. Pour des raisons de fabrication, la liaison pivot est réalisée entre le carter de distribution 31b et un élément de pivot 11 solidarisé à l'essieu 1, cet élément de pivot pouvant ainsi être réalisé avec des tolérances de fabrications plus fines que l'essieu 1.

L'une des liaisons pivot, en l'occurrence la liaison pivot supérieure 2A dans le mode de réalisation représenté sur la figure 1, comprend typiquement des conduits formant des lignes d'alimentation hydraulique pour l'appareil hydraulique 3 réalisées directement dans le pivot et reliées au distributeur 31 de l'appareil hydraulique 3.

L'autre des liaisons pivot 2B, ici la liaison pivot inférieure, comprend des moyens pour la formation de conduit pneumatique au sein du pivot, comme on le décrit ci-après.

En variante la liaison pivot supérieure 2A comprend des moyens pour la formation de conduit pneumatique et la liaison pivot inférieure 2B comprend des conduits formant des lignes d'alimentation hydraulique pour l'appareil hydraulique 3.

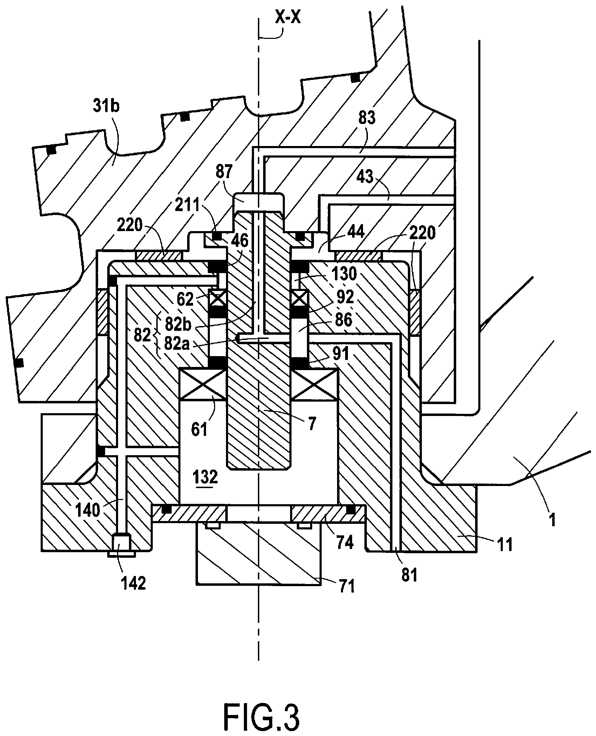

La liaison pivot considérée permet une mise en rotation relative de l'appareil hydraulique 3 et de l'essieu 1 selon le premier axe de rotation X-X. Les figures 2 et 3 présentent deux modes de réalisation d'une telle liaison pivot.

Un ou plusieurs patins de frottement 220 sont interposés entre l'essieu 1 (ou le cas échéant l'élément de pivot 11) et le carter de distribution 31b, ces patins de frottement 220 étant adaptés pour assurer un contact tout en permettant une rotation relative entre l'essieu 1 (ou le cas échéant l'élément de pivot 11) et le carter de distribution 31b et en présentant une bonne résistance à l'usure. Dans l'exemple représenté, deux patins de frottement 220 sont représentés ; l'un assurant un contact axial par rapport à l'axe de rotation X-X entre l'essieu 1 et le carter de distribution 31b, et l'autre un contact radial par rapport à l'axe de rotation X-X entre l'essieu 1 et le carter de distribution 31b. Ces patins de frottement 220 assurent ainsi la formation de la liaison pivot entre l'essieu 1 (via l'élément de pivot 11) et le carter de distribution 31b.

Une chambre à graisse 44 est formée au niveau de l'interface entre l'élément de pivot 11 et le carter de distribution 31b, afin de lubrifier les patins de frottement 220. Des éléments d'étanchéité sont positionnés afin d'isoler la chambre à graisse 44. Un conduit graisseur 43 est ici formé dans le carter de distribution 31b pour réaliser une amenée de graisse dans la chambre à graisse 44. Le conduit graisseur 43 pourrait de manière alternative être réalisé dans l'élément de pivot 11, la fonction étant alors inchangée.

Le système proposé vise à réaliser une circulation d'air, c'est-à-dire une conduite pneumatique au sein du pivot, pour permettre une fourniture d'air sous pression entre l'essieu 1 et l'appareil hydraulique 3, ces deux éléments étant mobiles en rotation l'un par rapport à l'autre autour de l'axe de rotation X-X.

Des conduits et chambres à air sont ainsi aménagés dans l'essieu 1, dans l'élément de pivot 11 et dans le carter de distribution 31b comme on le décrit ci-après.

Un conduit d'essieu 81 est réalisé dans l'élément de pivot 11 (ou directement dans l'essieu 1 dans le cas d'un mode de réalisation ne comprenant pas l'élément de pivot 11), et relie le milieu externe à une chambre à air 85 formée entre l'élément de pivot 11 et le carter de distribution 31b.

Dans le mode de réalisation représentée le conduit d'essieu 81 est central dans le pivot et axé sur l'axe de rotation X-X. A titre de variante, le conduit d'essieu 81 peut ne pas être centré sur l'axe X-X et/ou avoir une partie incliné par rapport à l'axe X-X. Il peut également déboucher à une extrémité circonférentielle de l'élément de pivot 11.

Un conduit de distribution 83 formé dans le carter de distribution 31b s'étend ensuite depuis cette chambre à air 85 et est configuré pour être relié à une conduite pneumatique solidaire de l'appareil hydraulique 3.

Le conduit de distribution 83 peut être débouchant à son autre extrémité (et est alors adapté pour être associé à des éléments de connectique hydraulique), ou être relié à un conduit ou à une chambre à air aménagée dans l'appareil hydraulique 3. Le conduit de distribution 83 peut ainsi être relié à une chambre à air directement via la fonderie du carter de l'appareil hydraulique 3, pour permettre d'alimenter en air sous pression un pneumatique associé à l'appareil hydraulique 3.

On comprend donc ici que le conduit d'essieu 81 et le conduit de distribution 83 sont formés dans des éléments mobiles en rotation l'un par rapport à l'autre. C'est la chambre à air 85 qui réalise la liaison fluidique entre ces deux conduits 81 et 85, réalisant ainsi une circulation d'air au sein du pivot, sans nécessiter l'utilisation de conduits ou d'éléments flexibles reliant deux parties mobiles l'une par rapport à l'autre.

La chambre à air 85 est isolé de la chambre à graisse 44 par deux éléments d'étanchéité montés successivement, typiquement un joint à air 101 et un joint à graisse 102. Ces éléments d'étanchéité visent à empêcher la graisse de la chambre à graisse 44 de pénétrer dans la chambre à air 85, et à empêcher l'air de la chambre à air 85 d'atteindre la chambre à graisse 44.

Une zone intermédiaire 110 est alors formée entre les deux éléments d'étanchéité 101 et 102. Dans le mode de réalisation représenté, cette zone intermédiaire 110 est reliée au milieu ambiant via un conduit de fuite 120 muni d'un clapet anti retour taré 122, configuré de manière à permettre un échappement du fluide présent dans la zone intermédiaire 110 lorsque la pression y dépasse une valeur seuil prédéterminée. Le clapet anti-retour taré 122 est configuré pour s'ouvrir à une différence de pression inférieure à 1 bar, de préférence inférieure à 0,5 bar. La zone intermédiaire joue donc ici un rôle de zone tampon, et permet de recueillir et d'évacuer d'éventuelles fuites provenant de la chambre à graisse 44 ou de la chambre à air 85.

Dans l'exemple représenté, le conduit de fuite 120 est aménagé dans le carter de distribution 31b. On comprend que ce conduit de fuite peut également être aménagé dans l'élément de pivot 11, dès lors qu'il relie la zone intermédiaire 110 au milieu externe.

En variante, un unique joint assure l'étanchéité entre la chambre à graisse 44 et la chambre à air 85. Il n'y a alors pas de zone intermédiaire de formée.

La figure 3 est une variante du mode de réalisation représenté sur la figure 2, dans lequel le pivot est muni d'une pièce intermédiaire 7 de rotation, cette pièce intermédiaire 7 pouvant servir d'élément pour la mise en place d'un capteur de direction, par exemple sans contact.

La pièce intermédiaire 7 est montée fixe par rapport au carter de distribution 31b. Elle est isolée du milieu ambiant via un couvercle 74 monté fixe par rapport à l'élément de pivot 11 (et donc par rapport à l'essieu 1). Le couvercle 74 est ici formé en deux parties, et est ici associé à un bouchon 71, qui peut par exemple comprendre un capteur de rotation sans contact...

Dans l'exemple représenté, la pièce intermédiaire 7est emmanchée via une extrémité dans un logement du carter de distribution 31b, l'étanchéité de cette liaison étant assurée par un joint d'étanchéité 211 positionné dans une rainure formée dans la pièce intermédiaire 7.

Des éléments d'étanchéité 91 et 92 sont interposés entre l'élément de pivot 11 et la pièce intermédiaire 7, typiquement des joints d'étanchéité du type bague à lèvre. Selon un mode de réalisation, on peut également interposer des éléments de roulement ou des patins de frottements entre l'élément de pivot 11 et la pièce intermédiaire 7. Dans l'exemple représenté, deux éléments de roulement 61 et 62 sont interposés entre l'élément de pivot 11 et la pièce intermédiaire 7. Ces éléments de roulement 61 et 62 peuvent être encadrés par les éléments d'étanchéité 91 et 92, ou à l'inverse encadrer ces éléments d'étanchéité 91 et 92, ce qui est le cas du mode de réalisation représenté sur la figure 3.

A titre d'alternative non représentée sur les figures, aucun élément de roulement et/ou de frottement n'est interposé entre l'élément de pivot 11 et la pièce intermédiaire 7.

On comprend ainsi que la structure du conduit pour le passage d'air via le pivot doit être modifié par rapport au mode de réalisation de la figure 2 du fait de la présence de la pièce intermédiaire 7 de rotation.

Dans ce mode de réalisation, deux chambres à air sont ainsi formées ; une première chambre à air 86 entre l'élément de pivot 11 et la pièce intermédiaire 7, et une seconde chambre à air 87 entre et la pièce intermédiaire 7et le carter de distribution 31b. La première chambre à air 86 est isolée par les éléments d'étanchéité 91 et 92. Elle est reliée à un conduit d'essieu 81 qui présente une extrémité débouchant de l'élément de pivot 11 typiquement adaptée pour être reliée à une source d'alimentation en air sous pression.

Un conduit intermédiaire 82 est également formé dans la pièce intermédiaire 7, ce conduit intermédiaire 82 reliant la première chambre à air 86 à la seconde chambre à air 87. Dans l'exemple représenté, ce conduit intermédiaire 82 comprend un segment radial 82a s'étendant radialement par rapport à l'axe X-X, et un segment axial 82b s'étendant selon l'axe X-X.

Un conduit de distribution 83 est ici aussi formé dans le carter de distribution 31b, et s'étend ensuite depuis la seconde chambre à air 87 et est configuré pour être relié à une conduite pneumatique solidaire de l'appareil hydraulique 3.

Comme pour le mode de réalisation précédent, le conduit de distribution 83 peut être débouchant à son autre extrémité (et est alors adapté pour être associé à des éléments de connectique hydraulique), ou être relié à un conduit ou à une chambre à air aménagée dans l'appareil hydraulique 3. Le conduit de distribution 83 peut ainsi être relié à une chambre à air directement via la fonderie du carter de l'appareil hydraulique 3, pour permettre d'alimenter en air sous pression un pneumatique associé à l'appareil hydraulique 3.

L'association du conduit d'essieu 81, de la première chambre à air 86, du conduit intermédiaire 82, de la seconde chambre à air 87 et du conduit de distribution 83 permet ainsi de réaliser une circulation pneumatique entre l'essieu 1 et l'appareil hydraulique 3 directement via le pivot 2.

Comme pour le mode de réalisation représenté précédemment, la rotation entre l'élément de pivot 11 et le carter de distribution 31b est assurée via des patins de frottement 220. Ces patins de frottement 220 sont positionnés dans une chambre à graisse 44 alimentée par un conduit graisseur 43 ici formé dans le carter de distribution 31b, et configuré pour être relié à une source d'alimentation en graisse. Le conduit graisseur 43 pourrait de manière alternative être réalisé dans l'élément de pivot 11, la fonction étant alors inchangée. Un joint à graisse 46 est positionné entre l'élément de pivot 11 et la pièce intermédiaire 7, afin d'isoler la chambre à graisse 44. Dans l'exemple représenté, le joint à graisse 46 est monté en appui contre un épaulement radial interne de l'élément de pivot 11. Le joint à graisse 46 permet notamment d'isoler la chambre à graisse 44 par rapport à l'élément d'étanchéité 92 et à la première chambre à air 86.

Un tel montage successifs d'éléments d'étanchéité entraine la formation de volumes intermédiaires 130 entre deux éléments d'étanchéité successifs, notamment entre le joint à graisse 46 et l'élément d'étanchéité 92. Un tel volume intermédiaire 130 peut être exploité pour recueillir les éventuelles fuites provenant de la première chambre à air 86 et/ou de la chambre à graisse 44, et d'évacuer de telles fuites vers le milieu ambiant.

Ainsi, dans l'exemple représenté un conduit de fuite 140 relie le volume intermédiaire 130 au milieu ambiant via un clapet anti retour taré 142. De même, un volume intermédiaire 132 formé entre l'élément d'étanchéité 91 et le couvercle 74 est relié au milieu ambiant via un clapet anti retour taré. Dans l'exemple représenté, les volumes intermédiaires 130 et 132 sont tous deux reliés au milieu ambiant via un clapet anti retour taré 142 monté sur un conduit débouchant dans ces deux volumes. Le clapet anti retour taré 142 est configuré de manière à permettre un échappement d'air depuis les volumes intermédiaires 130 et 132 vers le milieu ambiant lorsque la pression au sein des volumes intermédiaires 130 et 132 dépasse une valeur seuil, ce qui permet ainsi de réaliser une décharge de la surpression dans ces volumes intermédiaires 130 et 132 en cas de fuites. En variante, chacun de ces volumes intermédiaires peut être relié au milieu ambiant via un conduit de fuite et un clapet anti retour taré spécifique. Le clapet anti-retour taré 142 est typiquement configuré pour s'ouvrir à une différence de pression inférieure à 1 bar, de préférence inférieure à 0,5 bar.

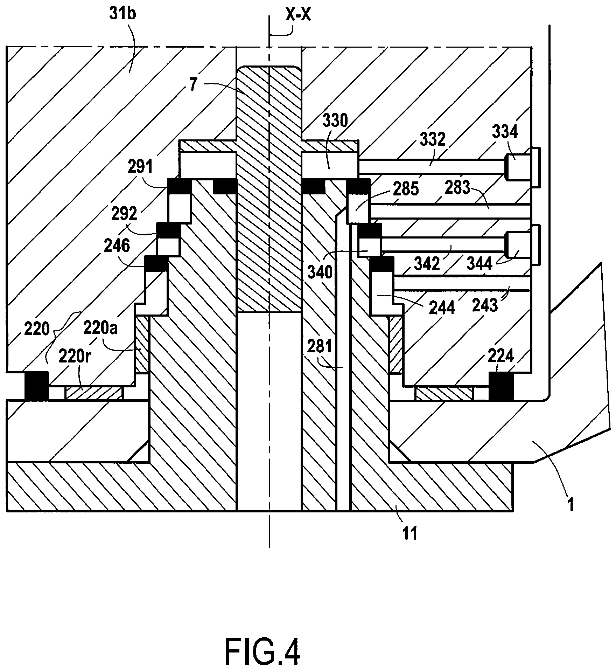

La figure 4 présente une variante du mode de réalisation décrit précédemment en référence à la figure 3.

Dans cette variante, la pièce intermédiaire 7 est logée entre l'élément de pivot 11 et le carter de distribution 31b ; aucun des éléments ne fait saillie de l'élément de pivot 11.

Le positionnement des patins de frottement 220 est également modifié. Dans cet exemple, on repère ainsi un patin de frottement axial 220a entre l'élément de pivot 11 et le carter de distribution 31b, et un patin de frottement radial 220r entre l'essieu 1 et le carter de distribution 31b. Ces patins de frottement 220 sont disposés dans une chambre à graisse 244 isolée du milieu ambiant par un élément d'étanchéité 224, et délimitée d'autre part par un joint à graisse 246. Un conduit graisseur 243 ici formé dans le carter de distribution 31b (mais pouvant de manière alternative être formé dans l'élément de pivot 11) assure une amenée de graisse dans la chambre à graisse 244.

Une chambre à air 285 est formée entre l'élément de pivot 11 et le carter de distribution 31b. Contrairement au mode de réalisation représenté sur la figure 2 dans lequel la chambre à air est formée dans la portion centrale du pivot 2, elle est ici réalisée en périphérie, de manière à ne pas nécessiter un passage au travers de la pièce intermédiaire 7.

Cette chambre à air 285 est délimitée par deux éléments d'étanchéité 291 et 292 interposés entre l'élément de pivot 11 et le carter de distribution 31b. Un conduit d'essieu 281 est réalisé dans l'élément de pivot 11 (ou directement dans l'essieu 1 dans le cas d'un mode de réalisation ne comprenant pas l'élément de pivot 11), et relie le milieu externe à une chambre à air 285 formée entre l'élément de pivot 11 et le carter de distribution 31b.

Un conduit de distribution 283 formé dans le carter de distribution 31b s'étend ensuite depuis cette chambre à air 285 et est configuré pour être relié à une conduite pneumatique solidaire de l'appareil hydraulique.

On comprend ainsi que ce mode de réalisation permet de proposer un pivot 2 muni d'une pièce intermédiaire 7, tout en conservant une structure simple pour la réalisation de la conduite pneumatique au sein du pivot 2.

De la même manière que dans les modes de réalisation précédents, on prévoit avantageusement des moyens assurant une purge des volumes adjacents à la chambre à air 285. Ainsi, un premier volume 330 séparé de la chambre à air 285 par l'élément d'étanchéité 291 est relié au milieu ambiant via un conduit de décharge 332 ici formé dans le carter de distribution 31b (mais pouvant de manière alternative être formé dans l'élément de pivot 11) muni d'un clapet anti retour taré 334. Un second volume 340 formé entre l'élément d'étanchéité 292 et le joint à graisse 246 est également relié au milieu ambiant via un conduit de décharge 342 ici formé dans le carter de distribution 31b (mais pouvant de manière alternative être formé dans l'élément de pivot 11) muni d'un clapet anti retour taré 344. Comme pour les modes de réalisation précédents, les clapets anti retour tarés permettent de réaliser une décharge de la pression au sein de ces volumes lorsque la pression y dépasse une valeur seuil.

Dans le mode de représentation représenté, les volumes 330 et 340 sont chacun associés à un conduit de décharge distinct. En variante, ces deux volumes peuvent être reliés au milieu ambiant via un conduit unique débouchant dans les deux volumes, et muni d'un unique clapet anti retour taré.

L'invention permet de réaliser le gonflage de pneumatique en utilisation uniquement des conduites fixes (plus besoin de tuyau souple). En effet une conduite fixe peut relier un compresseur et le conduit d'essieu 81, car il n'y a pas de mouvements relatifs entre ces deux pièces. Une conduite fixe peut également relier la conduite 83 avec un système de gonflage de pneumatique.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Ensemble comprenant un appareil hydraulique (3) comprenant un rotor et un stator, le rotor étant monté tournant par rapport au stator selon un second axe de rotation (Z-Z), et étant solidaire de moyens adaptés pour le montage d'une roue de véhicule,
un élément de pivot (11) destiné à être monté sur un essieu, et mobile en rotation par rapport à l'appareil hydraulique (3) selon un premier axe de rotation (X-X), le stator étant monté tournant par rapport à l'essieu (1) selon le premier axe de rotation (X-X),
**caractérisé en ce qu'**une chambre à air est formée entre l'élément de pivot (11) et l'appareil hydraulique (3), ladite chambre à air étant reliée à un conduit de distribution (83) aménagé dans l'appareil hydraulique, et à un conduit d'essieu (81) aménagé dans l'élément de pivot (11), de manière à former un conduit pneumatique entre l'élément de pivot (11) et l'appareil hydraulique (3), afin de permettre d'acheminer de l'air pour le gonflage/dégonflage d'un pneumatique.

2. Ensemble selon la revendication 1, comprenant en outre au moins un patin de frottement (220) positionné au contact de l'appareil hydraulique (3) et de l'élément de pivot (11), configuré de manière à permettre un mouvement en rotation autour du premier axe de rotation (X-X) entre l'élément de pivot (11) et l'appareil hydraulique (3).

3. Ensemble selon la revendication 2, dans lequel ledit au moins un patin de frottement (220) est positionné dans une chambre à graisse isolée de la chambre à air au moyen d'un joint à graisse, ladite chambre à graisse étant reliée à un conduit graisseur aménagé dans l'élément de pivot (11) ou dans l'appareil hydraulique (3).

4. Ensemble selon la revendication 3, dans lequel la chambre à graisse est séparée de la chambre à air par au moins un élément d'étanchéité.

5. Ensemble selon la revendication 4, dans lequel la chambre à graisse est séparée de la chambre à air par deux éléments d'étanchéité montés successivement, définissant entre eux une chambre intermédiaire, relié au milieu ambiant par un conduit comprenant un clapet anti retour taré

6. Ensemble selon la revendication 5, dans lequel le clapet anti-retour taré est configuré pour s'ouvrir pour une différence de pression inférieure à 1 bar, ou plus précisément inférieure à 0,5 bar.

7. Ensemble selon l'une des revendications 1 à 6, comprenant en outre une pièce intermédiaire (7) positionnée dans un logement formé entre l'appareil hydraulique (3) et l'élément de pivot (11).

8. Ensemble selon la revendication 7, dans lequel une première chambre à air (86) est formée entre l'élément de pivot (11) et la pièce intermédiaire (7), une seconde chambre à air (87) est formée entre la pièce intermédiaire (7) et l'appareil hydraulique (3), la première chambre à air (86) est reliée au conduit d'essieu (81), la seconde chambre à air (87) est reliée au conduit de distribution (83), et la première chambre à air (86) est reliée à la seconde chambre à air (87) via un conduit intermédiaire (82) formé dans la pièce intermédiaire (7).

9. Ensemble selon l'une des revendications 1 à 8, dans lequel chaque chambre à air est délimitée par des éléments d'étanchéité.

10. Ensemble selon l'une des revendications 1 à 9, dans lequel l'élément de pivot (11) et/ou l'appareil hydraulique (3) comprennent au moins un conduit reliant des volumes adjacent aux chambres à air au milieu ambiant, chacun desdits au moins un conduit étant muni d'un clapet anti retour taré, configuré de manière à permettre un échappement de fluide vers le milieu ambiant lorsque la pression au sein desdits volumes adjacent aux chambres à air dépasse une valeur seuil.

## Patentansprüche

1. Anordnung, umfassend eine Hydraulikvorrichtung (3), umfassend einen Rotor und einen Stator, wobei der Rotor so montiert ist, dass er sich in Bezug auf den Stator entlang einer zweiten Drehachse (Z-Z) dreht, und die mit Mitteln verbunden ist, die für die Montage eines Fahrzeugrads angepasst sind,
ein Schwenkelement (11), das dazu bestimmt ist, auf einer Achse montiert zu sein, und das in Bezug auf die Hydraulikvorrichtung (3) entlang einer ersten Drehachse (X-X) drehbeweglich ist, wobei der Stator drehbar in Bezug auf die Achse (1) entlang der ersten Drehachse (X-X) montiert ist,
**dadurch gekennzeichnet, dass** eine Luftkammer zwischen dem Schwenkelement (11) und der Hydraulikvorrichtung (3) ausgebildet ist, wobei die Luftkammer mit einer Verteilerleitung (83), die in der Hydraulikvorrichtung angeordnet ist, und mit einer Achsleitung (81) verbunden ist, die in dem Schwenkelement (11) angeordnet ist, um eine Pneumatikleitung zwischen dem Schwenkelement (11) und der Hydraulikvorrichtung (3) zu bilden, um das Befördern von Luft zum Aufblasen/Entleeren eines Reifens zu ermöglichen.

2. Anordnung nach Anspruch 1, ferner umfassend mindestens einen Reibungsschuh (220), der in Kontakt mit der Hydraulikvorrichtung (3) und dem Schwenkelement (11) positioniert und dazu ausgestaltet ist, eine Drehbewegung um die erste Drehachse (X-X) zwischen dem Schwenkelement (11) und der Hydraulikvorrichtung (3) zu ermöglichen.

3. Anordnung nach Anspruch 2, wobei mindestens ein Reibungsschuh (220) in einer Fettkammer positioniert ist, die von der Luftkammer mithilfe einer Fettdichtung isoliert ist, wobei die Fettkammer mit einer Schmierleitung verbunden ist, die in dem Schwenkelement (11) oder in der Hydraulikvorrichtung (3) angeordnet ist.

4. Anordnung nach Anspruch 3, wobei die Fettkammer von der Luftkammer durch mindestens ein Dichtungselement getrennt ist.

5. Anordnung nach Anspruch 4, wobei die Fettkammer von der Luftkammer durch zwei Dichtungselemente getrennt ist, die aufeinanderfolgend montiert sind, wobei zwischen ihnen eine Zwischenkammer definiert wird, verbunden mit der Umgebung durch eine Leitung, umfassend ein belastetes Rückschlagventil.

6. Anordnung nach Anspruch 5, wobei das belastete Rückschlagventil dazu ausgestaltet ist, sich durch einen Druckunterschied zu öffnen, der kleiner als 1 bar, oder genauer kleiner als 0,5 bar ist.

7. Anordnung nach einem der Ansprüche 1 bis 6, ferner umfassend ein Zwischenstück (7), das in einer Aufnahme positioniert ist, die zwischen der Hydraulikvorrichtung (3) und dem Schwenkelement (11) ausgebildet ist.

8. Anordnung nach Anspruch 7, wobei eine erste Luftkammer (86) zwischen dem Schwenkelement (11) und dem Zwischenstück (7) ausgebildet ist, eine zweite Luftkammer (87) zwischen dem Zwischenstück (7) und der Hydraulikvorrichtung (3) ausgebildet ist, die erste Luftkammer (86) mit der Achsleitung (81) verbunden ist, die zweite Luftkammer (87) mit der Verteilerleitung (83) verbunden ist, und die erste Luftkammer (86) mit der zweiten Luftkammer (87) über eine Zwischenleitung (82) verbunden ist, die in dem Zwischenstück (7) ausgebildet ist.

9. Anordnung nach einem der Ansprüche 1 bis 8, wobei jede Luftkammer durch Dichtungselemente begrenzt ist.

10. Anordnung nach einem der Ansprüche 1 bis 9, wobei das Schwenkelement (11) und/oder die Hydraulikvorrichtung (3) mindestens eine Leitung umfasst bzw. umfassen, die Volumina, die an die Luftkammern angrenzen, mit der Umgebung verbindet, wobei jede der mindestens einen Leitung mit einem belasteten Rückschlagventil versehen ist, das dazu ausgestaltet ist, ein Entweichen von Fluid in die Umgebung zu ermöglichen, wenn der Druck in den Volumina, die an die Luftkammern angrenzen, einen Schwellenwert überschreitet.

## Claims

1. An assembly comprising a hydraulic apparatus (3) comprising a rotor and a stator, the rotor being rotatably mounted relative to the stator along a second axis of rotation (Z-Z), and being secured to means adapted for the mounting of a vehicle wheel,
a pivot element (11) intended to be mounted on an axle, and movable in rotation relative to the hydraulic apparatus (3) along a first axis of rotation (X-X), the stator being rotatably mounted relative to the axle (1) along the first axis of rotation (X-X),
**characterized in that** an air chamber is formed between the pivot element (11) and the hydraulic apparatus (3), said air chamber being connected to a distribution conduit (83) arranged in the hydraulic apparatus, and to an axle conduit (81) arranged in the pivot element (11), so as to form a pneumatic conduit between the pivot element (11) and the hydraulic apparatus (3), in order to allow air to be conveyed for the inflation/deflation of a tire.

2. The assembly according to claim 1, further comprising at least one friction pad (220) positioned in contact with the hydraulic apparatus (3) and with the pivot element (11), configured to allow a rotational movement about the first axis of rotation (X-X) between the pivot element (11) and the hydraulic apparatus (3).

3. The assembly according to claim 2, wherein said at least one friction pad (220) is positioned in a grease chamber isolated from the air chamber by means of a grease seal, said grease chamber being connected to a grease conduit arranged in the pivot element (11) or in the hydraulic apparatus (3).

4. The assembly according to claim 3, wherein the grease chamber is separated from the air chamber by at least one sealing element.

5. The assembly according to claim 4, wherein the grease chamber is separated from the air chamber by two successively mounted sealing elements, defining therebetween an intermediate chamber, connected to the surrounding environment by a conduit comprising a rated check valve.

6. The assembly according to claim 5, wherein the rated check valve is configured to open for a pressure difference of less than 1 bar, or more precisely less than 0.5 bar.

7. The assembly according to any of claims 1 to 6, further comprising an intermediate part (7) positioned in a housing formed between the hydraulic apparatus (3) and the pivot element (11).

8. The assembly according to claim 7, wherein a first air chamber (86) is formed between the pivot element (11) and the intermediate part (7), a second air chamber (87) is formed between the intermediate part (7) and the hydraulic apparatus (3), the first air chamber (86) is connected to the axle conduit (81), the second air chamber (87) is connected to the distribution conduit (83), and the first air chamber (86) is connected to the second air chamber (87) via an intermediate conduit (82) formed in the intermediate part (7).

9. The assembly according to any of claims 1 to 8, wherein each air chamber is delimited by sealing elements.

10. The assembly according to any of claims 1 to 9, wherein the pivot element (11) and/or the hydraulic apparatus (3) comprise at least one conduit connecting volumes adjacent to the air chambers to the surrounding environment, each of said at least one conduit being equipped with a rated check valve, configured to allow the fluid to escape toward the surrounding environment when the pressure within said volumes adjacent to the air chambers exceeds a threshold value.
